# DEMANDE DE BREVET EUROPEEN

(11) **EP 4 714 507 A1**
(43) Date de publication de la demande: **25.03.2026**
(21) Numéro de dépôt: 25203598.5
(22) Date de dépôt: 22.09.2025
(51) Int. Cl.: A62C 4/00, B65D 90/32, B65D 90/36, F16K 17/16, H01M 50/342, H01M 50/251, H01M 50/242, H01M 50/264

(54) **PANNEAU D EXPLOSION AVEC UN MATERIAU ISOLANT THERMIQUEMENT**

(30) Priorité: 23.09.2024 FR 2410099
(71) Demandeur: Stif France, 49170 Saint-Georges-sur-Loire (FR); STIF (SUZHOU) COMPONENTS CO., LTD, Suzhou City 215103 (CN)
(72) Inventeur: BURGOS, José, 49170 La Possonnière (FR)
(74) Mandataire: Aupetit, Muriel J. C.

(57) **Abrégé**

Panneau d'explosion (1) comportant un élément de rupture (1') qui comprend une zone de fragilisation (11) et une surface périphérique de fixation (14), un cadre de bridage (3) agencé sur la surface périphérique de fixation sans recouvrir la zone de fragilisation (11), et un matériau isolant thermiquement (2) couplé à l'élément de rupture (1'). L'élément de rupture (1') présente une surface pleine et continue profilée tridimensionnelle qui est de fabrication monobloc, en particulier par emboutissage, en formant une coque ménageant un volume intérieur (V) dans lequel est logé le matériau isolant thermiquement (2).

## Description

L'invention concerne le domaine des panneaux d'explosion, et plus particulièrement des panneaux d'explosion avec isolant thermique.

Les panneaux d'explosion protègent des enceintes de stockage sans limitation, telles que silos, trémies, séchoirs, cuves, systèmes de filtration, élévateurs à godets, etc., ou encore des machines de transformation de matière. Ces enceintes ou machines stockent des produits pulvérulents ou des gaz qui sous certaines conditions sont susceptibles de provoquer une augmentation de pression et de température à l'intérieur de l'enceinte, pouvant conduire à une explosion. Les panneaux d'explosion sont alors aptes à se déchirer dans une zone de fragilisation en cas de surpression anormale dans les enceintes, engendrant un trou par où les gaz sous pression peuvent s'échapper.

Un panneau d'explosion est par exemple décrit dans le brevet CN115743967. Un panneau d'explosion comporte usuellement une feuille métallique dite de rupture comprenant une zone de fragilisation à proximité du bord périphérique de la feuille, un cadre supérieur disposé sur et autour de la feuille et servant à la fixation du panneau d'explosion, et au moins un joint d'étanchéité agencé sous et en périphérie de la feuille de rupture et recouvrant la zone de fragilisation. Il est également courant de disposer un joint d'interface d'étanchéité entre le cadre supérieur et la feuille de rupture. La fixation du panneau d'explosion autour d'une ouverture d'enceinte à protéger est obtenue par des moyens de boulonnage qui coopèrent avec des trous de fixation sur la totalité du pourtour du panneau, à proximité de la zone de fragilisation. Un autre exemple de panneau d'explosion est décrit dans le brevet CA1290642. Toutefois, la zone de fragilisation du panneau de ce document est agencée dans la partie centrale du panneau ne garantissant pas une étanchéité du panneau.

De plus, dans certaines applications, comme pour un conteneur logeant un système de stockage d'énergie (dénommé encore par le sigle anglais ESS pour « Energy Storage System ») et destiné à être installé en extérieur, on veille à ajouter au panneau d'explosion un panneau thermiquement isolant.

On rappelle qu'un conteneur pour ESS loge des batteries de stockage pour de l'énergie électrique généralement issue de systèmes de production d'énergie renouvelables tels que des panneaux photovoltaïques ou des éoliennes ; les batteries permettent d'alimenter un réseau d'alimentation électrique local ou temporaire. Les batteries stockées à l'intérieur des conteneurs produisent des dégagements gazeux et le risque d'emballement thermique existe. Or, l'emballement thermique conduit à l'accumulation d'une grande quantité de gaz inflammable et les conteneurs étant fermés, une explosion peut arriver. Les panneaux d'explosion sont donc une solution efficace pour minimiser le risque d'explosion.

Cependant, le conteneur étant en extérieur, le panneau d'explosion est en contact par l'une de ses faces avec l'environnement extérieur et selon les conditions climatiques, une différence de température trop importante entre l'intérieur du conteneur et l'extérieur, peut engendrer de la condensation à l'intérieur du panneau et du conteneur. Ce phénomène de condensation est absolument à éviter pour ne pas provoquer de la corrosion sur les équipements. En effet, la corrosion peut engendrer des défauts d'isolement électrique, des surchauffes des batteries et donc leur emballement thermique, ou bien encore des courts-circuits susceptibles de conduire à des incendies.

On connaît comme panneau d'explosion doté d'un isolant thermique, un panneau d'explosion dont la feuille de rupture délimitée par la zone de fragilisation est recouverte dans sa section d'un caisson isolant fait en aluminium et logeant une matière thermiquement isolante. Un tel panneau d'explosion est par exemple connu du brevet FR3145944. Le caisson isolant est un ensemble rapporté sur le dessus de la feuille de rupture. Le caisson isolant est fabriqué en réalisant d'abord un caisson puis en y ajoutant à l'intérieur de la matière thermiquement isolante. Le caisson est quant à lui fabriqué à partir d'une tôle pour constituer un fond, puis, par découpe des angles de la tôle et par pliage de chacun des côtés, pour former les parois latérales périphériques, les parois étant après pliage fixées entres elles au niveau des angles, plus particulièrement en rapportant à l'intérieur des angles des cornières d'une grandeur égale à la hauteur du caisson et en les fixant par collage via un mastic d'étanchéité qui assure en outre l'étanchéité des angles. L'assemblage des cornières et des parois latérales du caisson est renforcé avantageusement par des rivets. Pour la fixation du caisson isolant à la feuille de rupture du panneau d'explosion, les parois latérales présentent des retours à l'opposé du fond pour leur fixation par rivetage à la feuille de rupture. Un mastic d'étanchéité est ajouté au niveau du pourtour des parois et de la feuille de rupture.

Cependant, la conception de ce caisson isolant et sa fixation rapportée au panneau d'explosion présentent un inconvénient majeur. En effet, le caisson subit les conditions climatiques qui dans le temps agressent les zones d'étanchéité en fragilisant l'intégrité du mastic d'étanchéité et de ce fait, rend possible les infiltrations d'eau à l'intérieur du caisson. Le matériau isolant se gorge d'eau et alourdit le caisson et donc le poids sur la feuille de rupture pour au final modifier l'efficacité initiale du panneau d'explosion dont la feuille de rupture doit pourtant pouvoir aisément et extrêmement rapidement se rompre et s'ouvrir sur la totalité de sa surface. De plus, le principe de fabrication et de fixation du caisson présente comme autre inconvénient de nécessiter de nombreuses étapes.

L'invention a donc pour but de proposer un panneau d'explosion avec isolant thermique, qui ne présente pas les inconvénients précités, en particulier qui réponde aux exigences de sécurité sans risque de perte d'étanchéité dans le temps et qui soit plus simple de fabrication.

Selon l'invention, le panneau d'explosion est conforme à la revendication 1. En particulier, le panneau d'explosion comporte :
- un élément de rupture qui comprend une zone de fragilisation (apte à se déchirer en cas de surpression à l'intérieur de la structure à laquelle est destiné à être fixé le panneau d'explosion) et une surface périphérique de fixation, la surface périphérique de fixation comprenant des orifices de fixation,
- un cadre de bridage agencé sur la surface périphérique de fixation sans recouvrir la zone de fragilisation (le cadre de bridage étant agencé à l'extérieur de la section intérieure de la zone de fragilisation pour ne pas empêcher l'ouverture de l'élément de rupture),
- de préférence, un joint d'étanchéité dit d'interface pris en sandwich entre la surface périphérique de fixation et le cadre de bridage et recouvrant la zone de fragilisation, et
- un matériau isolant thermiquement couplé à l'élément de rupture,

le panneau d'explosion étant caractérisé en ce que
l'élément de rupture présente une surface pleine et continue profilée tridimensionnelle qui est de fabrication monobloc en formant une coque qui comprend une surface principale, une paroi périphérique sensiblement perpendiculaire à la surface principale en étant continue et fermée sur la totalité de son pourtour (la paroi fait tout le pourtour de la face principale et est à angles fermés), et un épaulement périphérique à l'opposé de la surface principale et faisant saillie perpendiculairement à la paroi en direction de l'extérieur de la coque, l'épaulement constituant la surface périphérique de fixation de l'élément de rupture, la zone de fragilisation étant disposée dans l'épaulement entre les orifices et la paroi de la coque, et en ce que la coque ménage un volume intérieur (à paroi fermée continue) dans lequel est logé le matériau isolant thermiquement.

Ainsi, l'élément de rupture du panneau d'explosion procure par sa coque profilée tridimensionnelle une pièce aux deux fonctions combinées, la fonction de rupture du panneau et la fonction d'isolation thermique du panneau, tout en garantissant une étanchéité parfaite du fait de la fabrication monobloc de la coque. En effet, la forme tridimensionnelle de la coque est fabriquée de manière monobloc ; elle est fabriquée à partir d'une seule pièce qui garde tout au long de l'étape de mise en forme tridimensionnelle une continuité de surface pleine et fermée d'un seul tenant, c'est-à-dire que la jonction entre la face principale et la paroi est pleine et continue, la paroi est pleine et continue sur tout son pourtour, et la jonction entre la paroi et l'épaulement périphérique est pleine et continue. Une étanchéité parfaite de l'élément de rupture intégrant l'isolant thermique, est par conséquent obtenue entre l'environnement extérieur au panneau d'explosion et le matériau isolant. L'élément de rupture intégrant l'isolant thermique peut en particulier être agencé en extérieur de la structure à protéger, sans risque d'infiltrations d'eau dues à des intempéries.

Selon une caractéristique, la coque (l'élément de rupture) est fabriquée par emboutissage. De préférence, l'élément de rupture est une membrane métallique profilée tridimensionnellement qui a été formée par emboutissage.

Selon une caractéristique, la hauteur de la paroi périphérique qui ménage le volume intérieur d'accueil du matériau isolant, est comprise entre 20 et 100 mm, de préférence est de l'ordre de 40 mm. De préférence, le matériau isolant thermiquement est agencé dans la coque sans faire saillie au-delà du plan de l'épaulement.

Selon une caractéristique, le matériau isolant thermiquement occupe l'ensemble de l'intérieur de la coque en étant en applique contre l'intérieur de la surface principale et contre l'intérieur de la paroi périphérique. Le matériau isolant thermiquement est par exemple de la laine de roche qui a été découpée selon la forme profilée exacte du volume intérieur de la coque. En variante, le matériau isolant thermiquement se présente sous la forme d'au moins un panneau isolant de section équivalente à la section de la surface principale et apposé contre l'intérieur de la surface principale. De préférence le matériau isolant thermiquement est au moins collé contre l'intérieur de la surface principale.

Selon une caractéristique, l'épaulement de fixation comporte des orifices de fixation qui correspondent aux orifices de fixation du panneau d'explosion. Selon une caractéristique, l'épaulement de fixation peut intégrer en outre des bossages (formés également par formage du type emboutissage) autour des orifices de fixation, les bossages étant à fonction de butées de serrage lors du bridage du panneau d'explosion.

Selon une caractéristique, le joint d'étanchéité d'interface est en forme de cadre, éventuellement en plusieurs parties correspondant aux côtés du panneau d'explosion et coopérant mutuellement par des formes mâles-femelles pour une continuité de surface.

Selon une caractéristique, comporte un élément d'étanchéité dit d'appui qui est agencé au moins en périphérie du dessous de la surface de fixation, en étant au moins contre la face dite inférieure de l'épaulement, opposée à celle recevant le cadre de bridage et de préférence le joint d'étanchéité d'interface (l'élément d'étanchéité d'appui étant destiné à s'appuyer sur la structure à protéger ou bride de fixation solidaire de la structure), et en s'étendant sur au moins une partie du matériau isolant thermiquement en couvrant la zone de fragilisation, l'élément d'étanchéité d'appui étant de préférence solidarisé par collage.

Selon une caractéristique, l'élément d'étanchéité d'appui est en forme de cadre, ou bien est une plaque d'étanchéité qui recouvre et s'étend en continue sur la face inférieure de l'épaulement et sur la totalité du matériau isolant thermiquement. L'élément d'étanchéité d'appui comporte des orifices traversants en regard des orifices de fixation de l'épaulement et d'orifices du cadre de bridage et d'orifices du joint d'étanchéité d'interface pour la fixation étanche du panneau d'explosion à la structure à protéger. La fixation se fait de préférence par boulonnage.

Dans une variante de réalisation du panneau d'explosion, le panneau d'explosion comporte en outre une plaque rigide, en particulier métallique, qui est plaquée contre le matériau isolant thermiquement à l'opposé de la surface principale de la coque (de sorte à fermer la coque), la plaque étant fixée à des pattes de fixation rendues solidaires de l'intérieur de la coque, de préférence par soudage et de préférence à proximité d'angles de la coque, la plaque pouvant en outre comprendre des retours en périphérie qui se plaquent contre l'intérieur de la paroi périphérique de la coque. Le matériau isolant thermiquement est totalement enveloppé (par la coque et la plaque).

Selon une caractéristique, la coque qui enferme le matériau isolant thermiquement est en surélévation par rapport à la surface de fixation, et en particulier la coque (donc le matériau isolant thermiquement) est destinée à être du côté extérieur de la structure sur laquelle est destiné à être fixé le panneau d'explosion via la surface de fixation.

Selon une caractéristique, le panneau d'explosion comporte un matériau supplémentaire isolant thermiquement, qui est rapporté en-dessous du plan de l'épaulement de la coque (le matériau supplémentaire isolant thermiquement fait saillie par rapport au volume de la coque rempli déjà de matériau isolant thermiquement), le matériau supplémentaire isolant thermiquement étant fixé directement au matériau isolant thermiquement logé dans la coque, en particulier par collage, et/ou fixé contre l'élément d'étanchéité d'appui.

Selon une caractéristique, le panneau d'explosion comporte un caisson agencé en regard de l'intérieur de la coque (en-dessous de la coque) et de surface limitée à la section intérieure de la zone de fragilisation, le caisson logeant un matériau supplémentaire isolant thermiquement et le caisson étant rapporté contre la coque (la face inférieure de la coque), en particulier le caisson étant fixé mécaniquement à la coque et de préférence via des moyens solidaires qui sont intérieurs à la coque. Le caisson ferme ainsi la coque à l'opposé de la surface principale. Avantageusement, le caisson est conçu (forme et dimensions) pour être apte à s'inscrire en pivotement à travers la section intérieure délimitée par la zone de fragilisation, en particulier en présentant une paroi au moins du côté de la zone de fragilisation qui est à pan biaisé en étant convergente vers l'intérieur du caisson.

L'invention se rapporte également à une structure de stockage comportant au moins un panneau d'explosion précité de l'invention. Dans l'ensemble de la présente demande, on entend par l'expression "structure de stockage" toute structure ou enceinte fermée dans laquelle des produits sont amenés à séjourner ou à y circuler au moins momentanément. A titre non limitatif, une telle structure est notamment un silo, une trémie, une cuve, un mélangeur, un système de filtration, une tuyauterie, un élévateur à godets, un conteneur pour ESS.

Enfin, l'invention se rapporte à un procédé de fabrication d'un panneau d'explosion précité de l'invention, comportant la fabrication préalable de l'élément de rupture à partir d'une membrane (flan) métallique en usinant des orifices de fixation et une zone de fragilisation, caractérisé en ce que la membrane métallique est en outre emboutie pour former la coque tridimensionnelle à surface pleine et continue (la coque présentant l'épaulement périphérique comprenant les orifices de fixation et une paroi faisant saillie perpendiculairement, la zone de fragilisation étant disposée dans l'épaulement entre les orifices et la paroi).

Dans la suite de la description le terme de « hauteur », les qualificatifs « supérieur », « inférieur », « haut » et « bas » d'un élément du panneau d'explosion sont utilisés pour mieux comprendre l'invention en considérant le panneau d'explosion installé à titre d'exemple sur le dessus d'une structure à protéger.

La présente invention est maintenant décrite à l'aide d'exemples uniquement illustratifs et nullement limitatifs de la portée de l'invention, et à partir des illustrations jointes, dans lesquelles :
- [Fig. 1] représente une vue en perspective d'un exemple de panneau d'explosion selon l'invention avec une coque isolante.
- [Fig. 2] est une vue en perspective éclatée du panneau d'explosion de la fi-gure 1.
- [Fig. 3] est une vue de dessus du panneau d'explosion de la figure 1.
- [Fig. 4] est une vue partielle en coupe d'un panneau d'explosion de l'invention monté sur une structure à protéger sans les moyens de fixation rapportés.
- [Fig. 5] est une vue en perspective éclatée d'une variante du panneau d'explosion, en particulier par rapport à l'élément d'étanchéité d'appui.
- [Fig. 6] est une vue en coupe partielle du panneau d'explosion de la figure 2.
- [Fig. 7] est une vue en perspective éclatée d'une autre variante du panneau d'explosion, en particulier la coque étant fermée.
- [Fig. 8] est une vue en coupe partielle du panneau d'explosion de la figure 7.
- [Fig. 9] est une vue en coupe partielle du panneau d'explosion selon une autre variante, en particulier en comprenant un matériau supplémentaire isolant thermiquement.
- [Fig. 10] correspond à la figure 9 selon une variante de l'élément d'étanchéité d'appui disposé entre le matériau isolant thermiquement logé dans la coque et le matériau supplémentaire isolant thermiquement.
- [Fig. 11] est une vue en perspective éclatée d'une autre variante encore du panneau d'explosion avec un caisson inférieur fermant la coque afin d'agencer un matériau isolant thermiquement en partie supérieure dans la coque et un matériau supplémentaire isolant thermiquement en partie inférieure dans le caisson.
- [Fig. 12] est une vue en coupe partielle du panneau d'explosion de la figure 11, par simplification, le matériau isolant thermiquement n'est pas illustré dans la coque et ni le matériau supplémentaire isolant thermiquement dans le caisson.
- [Fig. 13] est une vue schématique d'ouverture du panneau d'explosion du type de la figure 11, montrant la rotation de la coque et du caisson inscrit dans la zone de fragilisation.

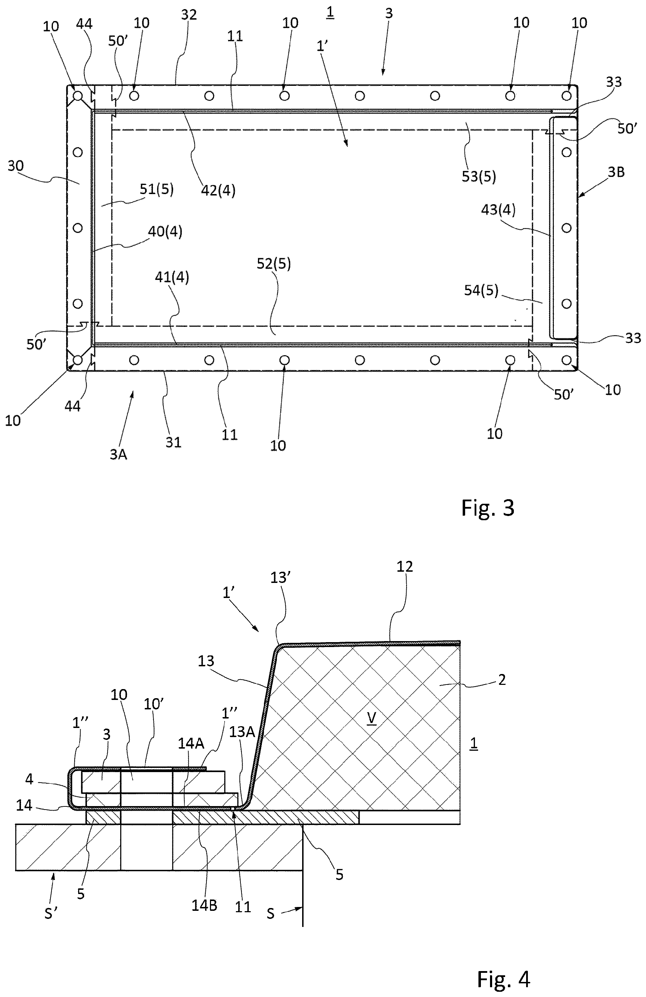

Le panneau d'explosion 1 de l'invention illustré sur les figures est destiné à être utilisé pour protéger d'une explosion une structure ou enceinte S (figure 4), en cas d'une surpression anormale à l'intérieur de celle-ci. Le panneau d'explosion 1 est fixé à la structure S via une bride de support S' solidaire de la structure S (et par boulonnage ici non illustré).

Le panneau d'explosion 1 est ainsi destiné à obturer de manière étanche une ouverture d'une structure, notamment d'une structure installée en extérieur comme un conteneur accueillant un système de stockage d'énergie (ESS). Le panneau d'explosion 1 est destiné à être fixé autour de l'ouverture de la structure par des moyens de vissage qui traversent à la fois le panneau d'explosion 1 et la structure. En cas de surpression, la partie centrale du panneau d'explosion 1 est apte à se déchirer tandis que le reste du panneau reste fixé à la structure. La fixation du panneau 1 se fait au travers d'orifices de fixation 10 ménagés tout autour du panneau dans l'épaisseur d'une surface dite de fixation.

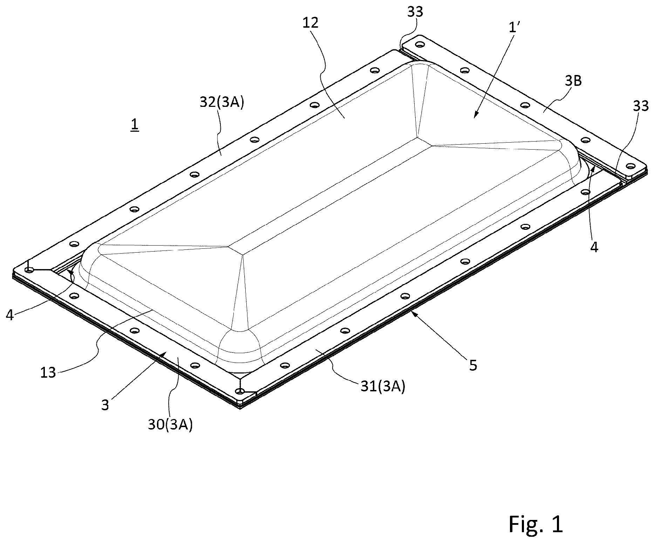

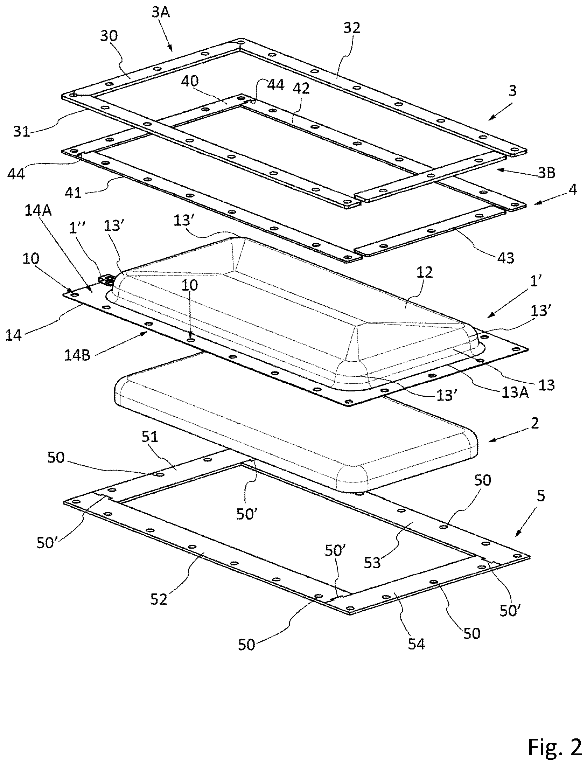

Tel que montré sur la figure 1 et sur la figure 2, le panneau d'explosion 1 comporte un élément de rupture 1' comprenant une zone de fragilisation 11 se déchirant en cas de surpression à l'intérieur de la structure, un matériau thermiquement isolant 2 pour isoler thermiquement l'ouverture de la structure recouverte du panneau d'explosion 1, un cadre de bridage 3 de préférence métallique, pour brider l'élément de rupture 1' contre la structure à protéger, un joint d'étanchéité d'interface 4 pris en sandwich entre le cadre de bridage 3 et l'élément de rupture 1', et un élément d'étanchéité d'appui 5 à l'opposé du joint d'étanchéité 4 et du cadre de bridage 3, qui est destiné à venir en applique autour de l'ouverture de la structure à protéger. Le joint d'étanchéité d'interface 4 et l'élément d'étanchéité d'appui 5 sont disposés en regard sur chacune des faces opposées de l'élément de rupture 1' et en applique contre la zone de fragilisation 11 pour étancher cette zone.

Le panneau d'explosion 1 est ici de forme rectangulaire, mais pourrait être carré ou circulaire ou encore selon une autre géométrie.

Selon l'invention, l'élément de rupture 1' du panneau d'explosion 1 forme un corps tridimensionnel 1' de surface profilée monobloc à la manière d'une coque, le matériau isolant 2 étant logé à l'intérieur de la coque 1'. Le corps tridimensionnel 1' en forme de coque (nommé aussi coque par la suite) comprend une surface principale ou fond 12, une paroi périphérique 13 et un épaulement périphérique 14 à l'opposé du fond 12, en saillie de la paroi 13 et perpendiculaire à celle-ci vers l'extérieur de la coque. L'épaulement périphérique 14 forme un cadre et constitue la surface de fixation du panneau d'explosion 1. L'épaulement 14 comporte les orifices 10 qui y ont été usinés.

Le corps 1' est fabriqué d'un seul tenant selon une surface profilée tridimensionnelle continue. Une telle surface profilée continue est obtenue par emboutissage d'une membrane métallique. Cette forme profilée de la membrane métallique en trois dimensions procure une surélévation du fond 12 et ménage un volume d'accueil V définissant l'intérieur de la coque 1' pour loger le matériau isolant 2. De plus, cette forme profilée monobloc procure une surface continue de la coque 1', à la jonction de chaque changement de profil, à savoir entre le fond 12 et la paroi 13, aux angles 13' de la paroi 13 et entre la paroi 13 et l'épaulement 14, ce qui garantit une parfaite étanchéité par rapport à l'intérieur de la coque, et donc par rapport au matériau isolant 2. Par ailleurs, la coque 1' présente l'avantage de pouvoir constituer directement l'extérieur du panneau d'explosion destiné à être en contact avec l'environnement extérieur de la structure à protéger, car sa surface continue monobloc, y compris au niveau de la paroi 13, est parfaitement étanche.

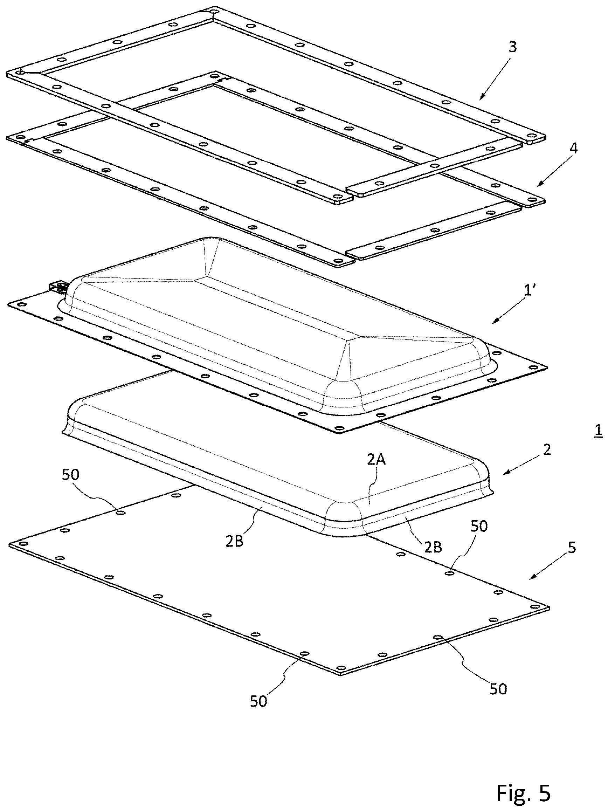

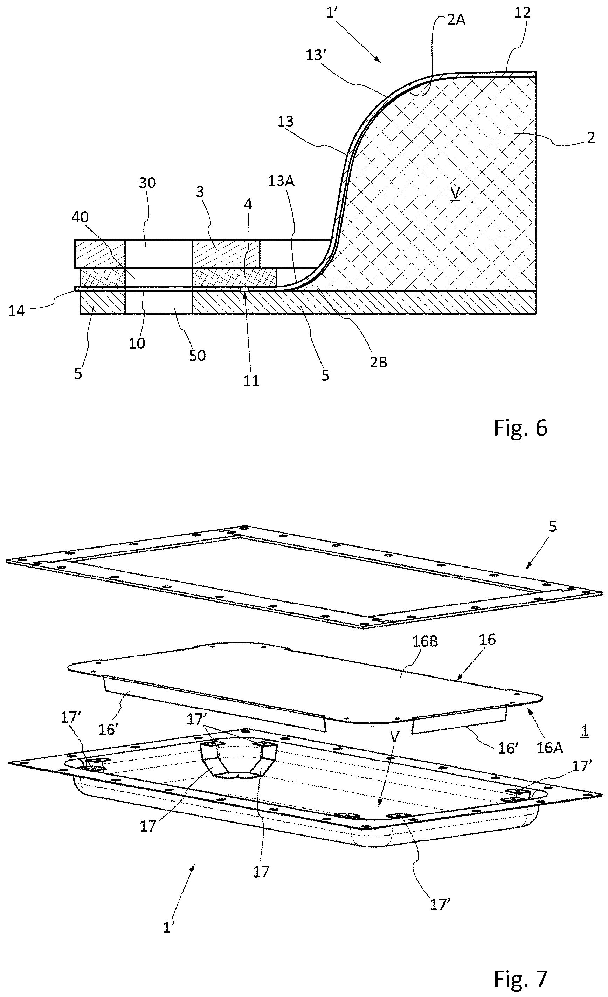

Le corps 1' de surface profilée tridimensionnelle (la coque) comporte la zone de fragilisation 11 qui fournit directement la fonction d'explosion au corps 1' et au panneau d'explosion 1. La zone de fragilisation 11 est disposée dans l'épaulement 14 entre les orifices 10 et la paroi 13, et à distance de la base 13A de la paroi (à distance du début de la formation de la paroi). La zone de fragilisation 11 est destinée à être recouverte par le joint d'étanchéité d'interface 4 comme il sera décrit plus en détail ultérieurement. Ainsi, le panneau d'explosion 1 de l'invention intègre en une seule pièce les fonctions de rupture et d'isolation thermique. La coque 1' est à la fois un logement d'accueil étanche pour un matériau isolant et une membrane de rupture en cas d'explosion. Cette conception du panneau d'explosion 1 présente l'avantage d'agencer le matériau isolant avant tout à l'extérieur de la structure à protéger. En position d'installation du panneau d'explosion 1 sur la structure à protéger, la coque 1' est disposée du côté extérieur de la structure, en contact direct avec l'environnement extérieur et les intempéries. Avantageusement, l'emboutissage est conçu afin que la paroi 13 soit la moins inclinée possible par rapport à la verticale (comme schématisé sur la figure 4), et donc soit la plus droite possible par rapport à sa base 13A à proximité de la zone de fragilisation 11 et au droit de la structure à protéger, de sorte à maximiser le volume d'intégration du matériau isolant thermiquement pour optimiser l'isolation thermique en regard de l'ouverture de la structure. Par ailleurs, les figures 5 et 6 montrent que le matériau isolant thermiquement 2 présente une forme adaptée en partie supérieure 2A et inférieure 2B pour épouser l'ensemble du volume intérieur V de la coque 1', y compris dans les coins 13' et au niveau de la base 13A de la coque.

La membrane métallique constitutive de la coque 1' présente une épaisseur de préférence comprise entre 0,5 et 1,2 mm, par exemple de l'ordre de 0,8 millimètre. La zone de fragilisation 11 est agencée dans l'épaisseur de la membrane et est apte à se rompre en cas de surpression dans la structure à protéger. La zone de fragilisation 11 consiste par exemple en des fentes discontinues dans l'épaisseur de la membrane (réalisées généralement au laser, et reliées par des parties pleines frangibles). La zone de fragilisation 11 est disposée sur tout ou partie du pourtour de l'épaulement. Selon les modes de réalisation du panneau d'explosion 1, la zone de fragilisation 11 peut s'étendre sur tout le pourtour ou seulement en partie telle qu'en U comme illustré sur la fi-gure 3. La zone de fragilisation 11 s'étend ici sur trois côtés, le quatrième côté en étant dépourvu pour former une charnière à l'ouverture tout en garantissant que le panneau d'explosion 1 reste solidaire de la structure via l'épaulement 14 de fixation.

Avantageusement, le panneau d'explosion 1 comporte un point de mise à la masse 1" (illustré sur les figures 2 et 4). Le point de mise à la masse 1" est par exemple une patte de mise à la masse (localisée à la périphérie de l'épaulement) pliée en U (figure 4). Avantageusement, la patte de mise à la masse 1" est intégrée à la coque 1' avec une partie qui constitue une partie localisée de l'épaulement 14 (cette partie localisée ayant été obtenue lors de la fabrication et correspondant à un appendice détouré dans le flan de tôle initial de la membrane) et un retour (obtenu par pliage) qui ménage un espace pour le logement du joint d'étanchéité d'interface 4 et du cadre de bridage 3, le retour (donc la patte de mise à la masse) étant en contact direct avec le cadre de bridage 3 (métallique). La patte de mise à la masse 1" (le retour) possède un orifice 10' qui est aligné avec un orifice de fixation 10 de l'épaulement 14. Le point de mise à la masse 1" présente pour avantage de fournir une liaison de mise à la masse du panneau d'explosion 1 sans ajout de pièce. La liaison à la masse est fonctionnelle lorsqu'un moyen mécanique de fixation est ajouté, tel qu'une vis ou un écrou, en exerçant un serrage suffisant sur la patte 1" de manière à créer la continuité électrique via la bride support S.

Pour assurer l'étanchéité du panneau d'explosion 1, et donc de la coque 1', au niveau de la zone de fragilisation 11 et pour fixer le panneau d'explosion et donc la coque 1', à sa périphérie, le panneau d'explosion 1 comporte le joint d'étanchéité d'interface 4 et le cadre de bridage 3.

Le cadre de bridage 3 présente une géométrie qui correspond à la périphérie de l'élément de rupture 1'. Le cadre de bridage 3 est agencé en regard de la totalité de l'épaulement 14 sans recouvrir la zone de fragilisation 11. De préférence, le cadre de bridage 3 est en plusieurs parties séparées pour gagner en matière de fabrication et en coûts de fabrication. Comme illustré sur la figure 1 et la figure 3, le cadre de bridage 3 est de préférence au moins en deux parties ou ensembles 3A et 3B. Ici le panneau d'explosion est de forme rectangulaire et la zone de fragilisation s'étend en U selon un petit côté et deux grands côtés. Le cadre de bridage 3 est ici en quatre parties, 30, 31, 32 et 3B. Un premier ensemble 3A du cadre de bridage est en U en suivant le périmètre en U de la zone de fragilisation 11. Le cadre de bridage 3 ne recouvre pas la zone de fragilisation 11, seul le joint d'interface 4, par ses parties 40, 41 et 42, recouvre la zone de fragilisation 11. Sur la figure 3, la zone de fragilisation 11 est illustrée pour schématiquement la visualiser mais n'est en réalité pas visible car cachée par le joint d'étanchéité d'interface 4. Le premier ensemble 3A comprend trois parties, une âme 30 et deux ailes opposées 31 et 32, l'âme et les ailes constituant trois parties séparées mais néanmoins aboutées dans les angles du U et solidaires ensemble après montage (lors de la fixation par boulonnage du panneau d'explosion à la structure). Le premier ensemble 3A du cadre de bridage s'étend par ses ailes 31 et 32 selon les deux grands côtés du panneau d'explosion et par son âme 30 selon un petit côté, ces trois côtés correspondant aux côtés comprenant la zone de fragilisation 11. En cas de surpression, la zone de fragilisation 11 en U se découpe automatiquement et la membrane de la coque s'ouvre en étant retenu par le quatrième côté dépourvu de zone de fragilisation et faisant charnière. La charnière de l'élément de rupture 1' se trouve ainsi à l'opposé du U, selon le quatrième côté qui est à l'opposé de l'âme 30 du cadre de bridage et qui s'étend selon la quatrième partie 3B du cadre de bridage. De préférence, la quatrième partie 3B du cadre de bridage n'est pas boulonnée avec le premier ensemble 3A, en particulier avec les parties directement adjacentes que sont les ailes 31 et 32, et n'est pas non plus aboutée. De préférence, le cadre de bridage 3 comporte des interstices 33 selon son épaisseur et selon sa largeur, interstices qui débouchent sur l'extérieur du panneau d'explosion. Ces interstices 33 forment des rainures et passages dans le cadre de bridage 3, qui permettent l'évacuation de l'eau et évitent à l'eau de stagner autour de la coque 1. Ici ces interstices sont ménagés du fait que la quatrième partie 3B n'est pas aboutée au reste du cadre de bridage - aux ailes 31 et 32.

Le joint d'étanchéité d'interface 4 présente une géométrie qui correspond à celle du cadre de bridage 3. Le joint d'étanchéité d'interface 4 est pris en sandwich entre l'épaulement 14 et le cadre de bridage 3, et recouvre la zone de fragilisation 11. Le joint d'étanchéité d'interface 4 dépasse ainsi du cadre de bridage 3 face à la paroi 13 (figure 1, figure 3 et figure 4). Le joint d'étanchéité d'interface 4 dépasse du cadre de bridage de quelques millimètres. Le joint d'étanchéité d'interface 4 est de préférence collé à la face dite supérieure 14A de l'épaulement 14. Toutefois, il n'y a pas de joint d'étanchéité d'interface au niveau des interstices 33 du cadre de bridage 3, l'eau pouvant ainsi s'écouler depuis le plan de la base 13A de la coque 1' vers l'extérieur de la coque. Le joint d'étanchéité d'interface 4 est ici aussi en plusieurs (quatre) parties 40, 41, 42 et 43 (schématiquement illustrées en pointillés sur la figure 3 car se trouvant dessous le cadre de bridage 3). Les quatre parties correspondent sensiblement aux parties 30, 31, 32 et 3B du cadre de bridage 3. Toutefois, les quatre parties 40, 41, 42 et 43 sont totalement jointives sur toute la périphérie et sont dessinées de manière à couvrir systématiquement les angles de l'épaulement 14 en étant aboutés au-delà des angles. De préférence, l'aboutement des quatre parties 40, 41, 42 et 43 est réalisé par une coopération mutuelle de formes mâles et femelles 44. Avantageusement, les lignes de jonction des formes de coopération 44 des différentes parties 40 à 43 du joint d'étanchéité d'interface 4 (figure 3) ne sont pas au droit des lignes d'aboutement des parties du cadre de bridage, en particulier ne sont pas au droit des lignes d'aboutement des trois parties en U 30, 31, 32 du cadre de bridage.

L'élément d'étanchéité d'appui 5 permet d'assurer l'étanchéité périphérique entre le panneau d'explosion 1, plus particulièrement entre la coque 1', et la structure à protéger. L'élément d'étanchéité d'appui 5 est en matériau compressible et potentiellement de qualité alimentaire, et constitué d'un matériau connu en soi. L'élément d'étanchéité d'appui 5 est de préférence rendu solidaire de la coque 1' par collage de préférence lors de la fabrication du panneau d'explosion. L'élément d'étanchéité d'appui 5 est solidaire de la face dite inférieure 14B de la totalité de l'épaulement 14 et au moins d'une partie du matériau isolant 2 (figure 4).

Selon l'exemple de réalisation montré à la figure 2 et à la figure 4, l'élément d'étanchéité d'appui 5 dessine un cadre qui a la forme de la périphérie de la coque 1'. L'élément d'étanchéité d'appui 5 couvre la face inférieure 14B de l'épaulement 14 en recouvrant la zone de fragilisation 11 et en dépassant sur le matériau isolant 2. L'élément d'étanchéité d'appui 5 en forme de cadre peut être en plusieurs parties, telle que quatre parties 51 à 54 (figure 2), qui sont assemblées en étant jointives entre elles pour former une surface d'étanchéité continue. Sur la figure 3 est illustré en pointillés l'élément d'étanchéité d'appui 5 qui se trouve sous l'épaulement 14 de la coque 1'. Les parties de l'élément d'étanchéité d'appui 5 comportent de préférence des formes mâles femelles 50' de coopération. Les lignes de jonction des formes mâles femelles 50' de coopération de l'élément d'étanchéité d'appui 5 sont décalées par rapport au droit des lignes de jonction des formes de coopération 44 des différentes parties 40 à 43 du joint d'étanchéité d'interface 4 (figure 3).

Selon un autre exemple de réalisation montré à la figure 5 et à la figure 6, l'élément d'étanchéité d'appui 5 a la forme d'une plaque pleine qui couvre la face inférieure 14B de l'épaulement 14 en recouvrant la zone de fragilisation 11 et couvre le matériau isolant 2. La plaque d'étanchéité d'appui 5 est de préférence collée, par exemple par un film de collage double face à (la face inférieure de) du matériau isolant 2.

La fixation du panneau d'explosion 1 se fait sur l'ensemble de sa périphérie grâce à des moyens de serrage non illustrés, en particulier par boulonnage. A titre d'exemple, les moyens de serrage comportent une vis et un écrou, la tête de vis étant accessible du côté extérieur du panneau d'explosion 1, depuis le cadre de bridages et l'écrou coopérant avec le corps de vis, à l'opposé de la tête et du côté intérieur de la structure. De préférence, une rondelle est prévue entre la tête de vis et le cadre de bridage 3.

Chacun des orifices de fixation 10 de la coque 1' correspond à des alésages respectifs et en regard, 30 du cadre de bridage 3, 40 du joint d'étanchéité d'interface 4, et 50 de l'élément d'étanchéité d'appui 5. Les alésages 40 et 50 des joint et élément d'étanchéité 4 et 5 présentent un diamètre ajusté à la section de moyens de serrage tels que le corps de vis ou d'une tige filetée, destinés à être introduits dans l'orifice de fixation 10 du panneau d'explosion de sorte que lors de la compression du joint d'étanchéité d'interface et de l'élément d'étanchéité d'appui, le matériau d'étanchéité s'insère dans le filetage des moyens de serrage, garantissant une parfaite étanchéité.

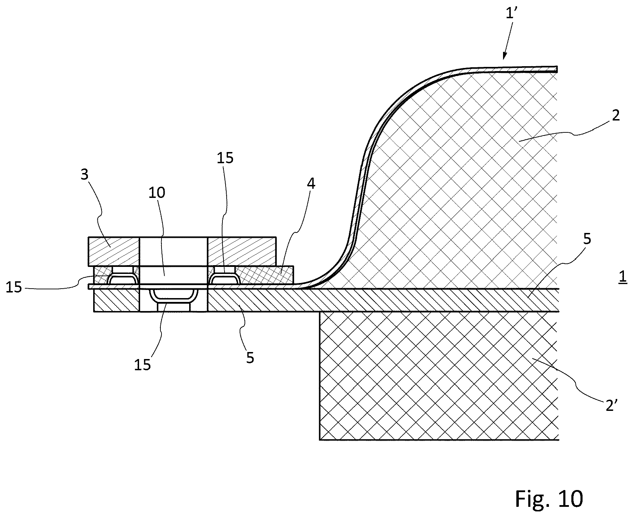

Le panneau d'explosion 1 peut comprendre des moyens d'ajustage en serrage 15 (variante de la figure 10) qui permettent à l'opérateur, lors de la fixation du panneau d'explosion, de ressentir le moment où est atteint le couple de serrage ad hoc des moyens de serrage, comprimant de manière optimale l'élément d'étanchéité d'appui 5. Ces moyens d'ajustage en serrage15 sont intégrés de manière monobloc à la coque 1', en particulier sont intégrés à l'épaulement 14 autour des orifices de fixation 10. Les moyens de serrage 15 forment des bossages répartis de manière homogène autour de chaque orifice de fixation 10 pour procurer une compression d'épaisseur uniforme du joint d'étanchéité d'interface 4 et de l'élément d'étanchéité d'appui 5.

De préférence, les moyens d'ajustage en serrage 15 sont disposés sur chacune des faces supérieure 14A et inférieure 14B de l'épaulement 14 de façon à calibrer la compression, d'une part de l'élément d'étanchéité d'appui 5, et d'autre part, du joint d'étanchéité d'interface 4, et cela de manière concomitante. Ce calibrage de part et d'autre de l'épaulement 14 et donc de la zone de fragilisation 11 qui est recouverte sur chacune des faces de l'épaulement, par le joint d'étanchéité d'interface 4 et l'élément d'étanchéité d'appui 5, évite de trop les écraser contre ladite zone de fragilisation 11 risquant sinon de trop la comprimer et de la déchirer. La hauteur des bossages est par exemple de 2 mm lorsque l'épaisseur du joint d'étanchéité d'interface 4 et de l'élément d'étanchéité d'appui 5 est par exemple de 4 mm.

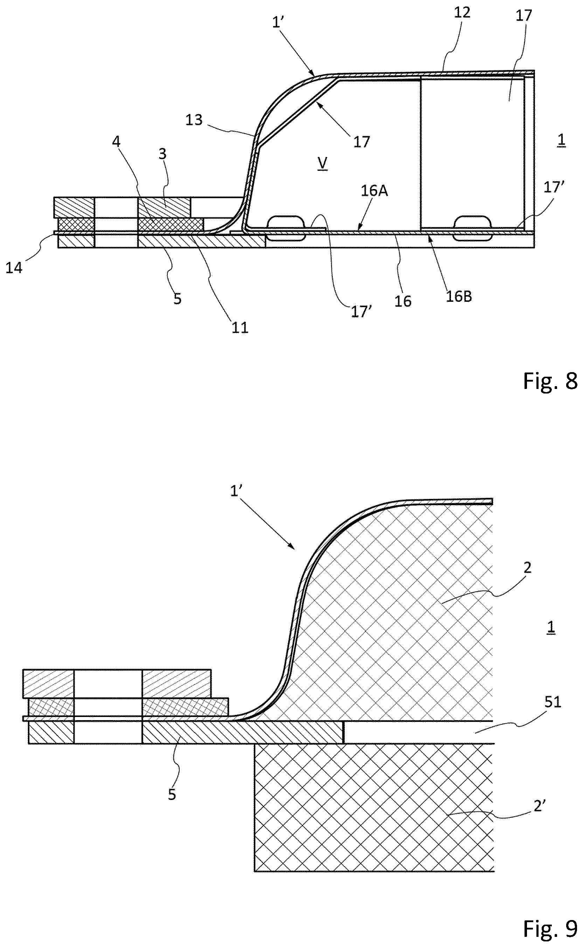

Les figures 7 et 8 illustrent une variante de réalisation de la coque 1' qui est fermée à l'opposé du fond 12 par une plaque métallique 16 pleine. Le matériau isolant 2 est destiné à être inséré avant fixation de la plaque 16 dans le volume intérieur V de la coque 1'. De préférence, la plaque métallique 16 comporte des retours périphériques 16' en saillie perpendiculairement à la face dite intérieure 16A de la plaque pour faciliter l'accouplement de la plaque 16 à la coque 1' par guidage, les retours 16' s'insérant dans le volume intérieur V de la coque et contre la paroi 13. La fixation de la plaque 16 à la coque 1' se fait via des pièces 17 solidaires de l'intérieur de la coque 1' et comprenant pattes de fixation 17' parallèles au plan de la plaque 16 et à l'opposé du fond 12, de préférence coplanaires à l'épaulement 14. De préférence, les pièces de fixation 17 sont agencées au niveau des angles de la coque 1', de chaque côté d'un angle de la paroi 13. De préférence, les pièces de fixation 17 sont solidaires de la paroi 13 par soudage.

Les figures 9 et 10 illustrent des variantes de réalisation du panneau d'explosion 1 avec non seulement un matériau isolant en face supérieure à logement étanche grâce à la coque 1', mais également avec un matériau thermiquement isolant supplémentaire 2' en face inférieure du panneau d'explosion, du côté intérieur de la structure à protéger. Le matériau thermiquement isolant 2' est solidarisé à la face inférieure du panneau d'explosion de préférence par collage à l'élément d'étanchéité d'appui 5.

Pour le panneau d'explosion 1 de la figure 9, l'élément d'étanchéité d'appui 5 formant un cadre d'étanchéité d'appui 5 (comme sur la figure 2), le matériau isolant supplémentaire 2' est collé au cadre d'étanchéité d'appui 5 avec en interface une couche d'air 51 en regard du matériau isolant 2 et à l'intérieur du cadre d'étanchéité d'appui 5. Le cadre d'étanchéité d'appui 5 comporte par exemple sur chacune de ses faces un film de collage double face, , d'une part en face supérieure pour être solidarisé avec le matériau isolant 2 au-dessus, et d'autre part en face inferieure pour être solidarisé au matériau isolant supplémentaire 2' en-dessous.

Pour le panneau d'explosion 1 de la figure 10, l'élément d'étanchéité d'appui 5 forme une plaque pleine d'étanchéité d'appui 5 (comme sur la figure 6) qui couvre toute la face inférieure du matériau isolant 2, et le matériau isolant supplémentaire 2' est collé (à la face inférieure de) cette plaque d'étanchéité d'appui 5, de préférence est collé selon toute sa surface. Le matériau isolant supplémentaire 2' est par exemple collé via un film de collage double face avec la plaque d'étanchéité d'appui 5.

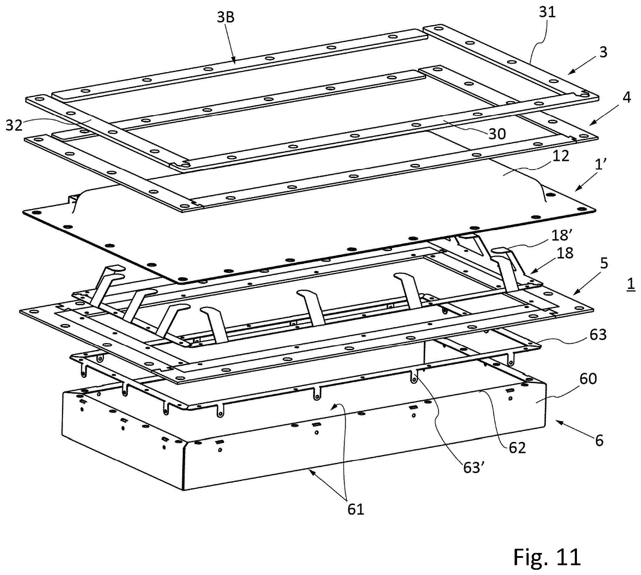

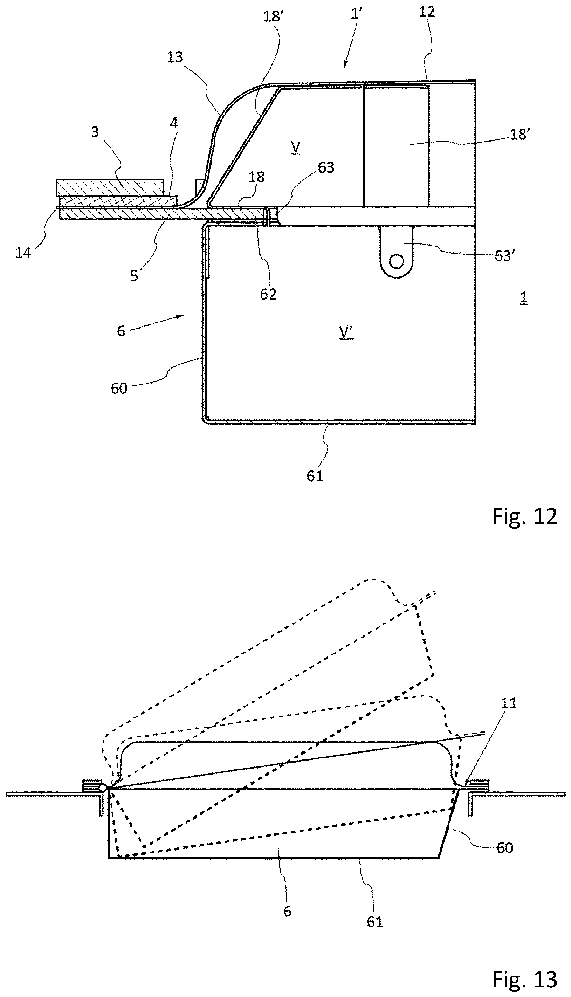

Les figures 11 et 12 illustrent encore un autre exemple de réalisation (non limitatif) d'agencement pour un matériau isolant supplémentaire 2' à loger en dessous (en face inférieure) de la coque 1'. Ici, la charnière du panneau d'explosion est située au niveau d'un grand côté, le long de la quatrième partie 3B isolée du reste du cadre de bridage. Le panneau d'explosion 1 comporte un caisson 6, de préférence métallique, qui ferme la coque 1' en face inférieure à l'opposé du fond 12. Le caisson 6 présente son volume intérieur V' qui est rempli du matériau isolant supplémentaire 2'. Le matériau isolant 2 de la face supérieure et celui supplémentaire 2' de la face inférieure peuvent n'être qu'un seul matériau qui remplit le volume intérieur V de la coque et le volume intérieur V' du caisson 6. Le caisson 6 est agencé en vis-à-vis de l'intérieur de la coque 1' sans dépasser hors de la zone de fragilisation 11. De préférence, le caisson 6 présente une paroi périphérique 60 qui est sensiblement au droit de la paroi périphérique 13 de la coque.

Pour la fixation du caisson 6, la coque 1' comporte un cadre de préférence métallique 18 qui est solidaire de l'intérieur de la coque via des pattes de fixation 18' soudées contre l'intérieur du fond 12 et de la paroi périphérique 13. Le caisson 6 possède un fond fermé 61, la paroi périphérique 60 (qui correspond à l'épaisseur d'isolation) et un rebord périphérique intérieur 62 opposé au fond et dirigé vers l'intérieur du caisson, perpendiculairement à la paroi 60, pour permettre la fixation du caisson 6 au cadre 18 de la coque 1'. De préférence, le caisson 6 comporte en outre un cadre de rigidification 63 qui se fixe sur le rebord périphérique 62 (et de préférence également contre l'intérieur de la paroi 60 du caisson via des pattes 63') et qui est destiné à se fixer au cadre 18 de la coque 1'. L'élément d'étanchéité d'appui 5 forme ici un cadre d'appui 5 qui s'étend sur toute la face inférieure de l'épaulement 14, recouvre la zone de fragilisation 11 et s'étend en regard du cadre 18 de la coque 1' et du rebord périphérique 62 et du cadre de rigidification 63. La fixation du caisson se fait notamment de la manière suivante : le cadre 18 de la coque 1' a été solidarisé à l'intérieur de la coque 1' ; le cadre 63 du caisson 6 est amovible par rapport au caisson 6 et est d'abord fixé seul contre le cadre 18 de la coque 1' par exemple par vissage ; le matériau isolant supplémentaire 2' est logé dans le caisson 6 puis le caisson 6 est rapporté contre son cadre 63, en y étant de préférence clipsé pour un maintien immédiat, et y est solidarisé mécaniquement par rivetage au niveau des pattes de fixation 63'.

Enfin, selon la géométrie et les dimensions de l'ouverture de la structure à protéger, lorsque le panneau d'explosion 1 comporte le caisson isolant 6 sous la coque 1' et en regard de l'intérieur de la section de la zone de fragilisation 11, le caisson 6 est conçu (forme et dimensions) pour être apte à s'inscrire en pivotement au travers de la section intérieure de la zone de fragilisation 11, lors de la rupture de ladite zone de fragilisation et la rotation de l'ensemble coque-caisson comme illustré en pointillés sur la figure 13. Ainsi, la forme et la géométrie du caisson seront adaptées afin que le caisson 6 puisse passer à travers la section de la zone de fragilisation 11 lors de l'ouverture de la coque 1' et par conséquent lorsque le caisson 6 engage son déplacement (en rotation) vers l'extérieur, comme illustré sur la figure 13. Par exemple, le caisson 6 de forme générale parallélépipédique rectangle présente à l'opposé de la charnière d'ouverture de la coque 1', sa paroi 60 qui est à pan biaisé en étant convergente vers le fond 61 (vers l'intérieur du caisson).

## Revendications

1. Panneau d'explosion (1) comportant :
- un élément de rupture (1') qui comprend une zone de fragilisation (11) et une surface périphérique de fixation (14), la surface périphérique de fixation (14) comprenant des orifices de fixation (10),
- un cadre de bridage (3) agencé sur la surface périphérique de fixation sans recouvrir la zone de fragilisation (11),
- de préférence, un joint d'étanchéité (4) dit d'interface pris en sandwich entre la surface périphérique de fixation (14) et le cadre de bridage (3) et recouvrant la zone de fragilisation (11), et
- un matériau isolant thermiquement (2) couplé à l'élément de rupture (1'),
**caractérisé en ce que** l'élément de rupture (1') présente une surface pleine et continue profilée tridimensionnelle qui est de fabrication monobloc en formant une coque qui comprend une surface principale (12), une paroi périphérique (13) sensiblement perpendiculaire à la surface principale en étant continue et fermée sur la totalité de son pourtour, et un épaulement (14) périphérique à l'opposé de la surface principale (12) et faisant saillie perpendiculairement à la paroi (13) en direction de l'extérieur, l'épaulement (14) constituant la surface périphérique de fixation de l'élément de rupture (1'), la zone de fragilisation (11) étant disposée dans l'épaulement (14) entre les orifices (10) et la paroi (13) de la coque, et **en ce que** la coque (1') ménage un volume intérieur (V) dans lequel est logé le matériau isolant thermiquement (2).

2. Panneau d'explosion selon la revendication 1, **caractérisé en ce que** la coque (1') est fabriquée par emboutissage.

3. Panneau d'explosion selon la revendication 1 ou 2, **caractérisé en ce que** la hauteur de la paroi périphérique (13) est comprise entre 20 et 100 mm, de préférence est de l'ordre de 40 mm.

4. Panneau d'explosion selon l'une quelconque des revendications précédentes, **caractérisé en ce que** le matériau isolant thermiquement (2) occupe l'ensemble de l'intérieur de la coque en étant en applique contre l'intérieur de la surface principale et contre l'intérieur de la paroi périphérique, de préférence le matériau isolant thermiquement étant au moins collé contre l'intérieur de la surface principale (12).

5. Panneau d'explosion selon l'une quelconque des revendications précédentes, **caractérisé en ce que** l'épaulement (14) comporte des orifices de fixation (10) et intègre des bossages (15) autour des orifices de fixation (10), les bossages étant à fonction de butées de serrage lors du bridage du panneau d'explosion.

6. Panneau d'explosion selon l'une quelconque des revendications précédentes, **caractérisé en ce qu'**il comporte un élément d'étanchéité (5) dit d'appui qui est agencé au moins en périphérie du dessous de la surface de fixation (14), en étant au moins contre la face dite inférieure (14B) de l'épaulement (14), opposée à celle recevant le cadre de bridage (3) et de préférence le joint d'étanchéité d'interface (4), et en s'étendant sur au moins une partie du matériau isolant thermiquement en couvrant la zone de fragilisation (11), l'élément d'étanchéité d'appui (5) étant de préférence solidarisé par collage.

7. Panneau d'explosion selon la revendication précédente, **caractérisé en ce que** l'élément d'étanchéité d'appui (5) est en forme de cadre, ou bien est une plaque d'étanchéité qui recouvre et s'étend en continue sur la face inférieure de l'épaulement (14) et sur la totalité du matériau isolant thermiquement (2).

8. Panneau d'explosion selon l'une quelconque des revendications précédentes, **caractérisé en ce qu'**il comporte une plaque (16) rigide, en particulier métallique, qui est plaquée contre le matériau isolant thermiquement (2) à l'opposé de la surface principale de la coque, la plaque (16) étant fixée à des pattes de fixation (17) rendues solidaires de l'intérieur de la coque (1'), de préférence par soudage et de préférence à proximité d'angles de la coque, la plaque (16) pouvant en outre comprendre des retours (16') en périphérie qui se plaquent contre l'intérieur de la paroi périphérique (13) de la coque.

9. Panneau d'explosion selon la revendication 7 ou 8, **caractérisé en ce qu'**il comporte un matériau supplémentaire isolant thermiquement (2'), qui est rapporté en-dessous du plan de l'épaulement (14) de la coque, le matériau supplémentaire isolant thermiquement (2') étant fixé directement au matériau isolant thermiquement (2) logé dans la coque (1'), en particulier par collage, et/ou fixé contre l'élément d'étanchéité d'appui (5).

10. Panneau d'explosion selon l'une quelconque des revendications précédentes, **caractérisé en ce qu'**il comporte un caisson (6) agencé en regard de l'intérieur de la coque (1') et de surface limitée à la section intérieure de la zone de fragilisation (11), le caisson (6) logeant un matériau supplémentaire isolant thermiquement (2') et étant rapporté contre la coque (1'), en particulier le caisson étant fixé mécaniquement à la coque et de préférence via des moyens solidaires qui sont intérieurs à la coque.

11. Panneau d'explosion selon la revendication précédente, **caractérisé en ce que** le caisson (6) est conçu pour être apte à s'inscrire en pivotement à travers la section intérieure délimitée par la zone de fragilisation (11), en particulier en présentant une paroi au moins du côté de la zone de fragilisation qui est à pan biaisé en étant convergente vers l'intérieur du caisson.

12. Structure de stockage (S) comportant au moins un panneau d'explosion (1) selon l'une quelconque des revendications précédentes, notamment la structure étant un silo, une trémie, une cuve, un mélangeur, un système de filtration, une tuyauterie, un élévateur à godets, un conteneur pour ESS.

13. Procédé de fabrication d'un panneau d'explosion (1) selon l'une quelconque des revendications 1 à 12 comportant la fabrication préalable de l'élément de rupture (1') à partir d'une membrane métallique en usinant des orifices de fixation (10) et une zone de fragilisation (11), **caractérisé en ce que** la membrane métallique est en outre emboutie pour former la coque (1') tridimensionnelle à surface continue.
